(19) Europäisches Patentamt
European Patent Office
Office européen des brevets

(11) EP 4 596 784 A1

(12) **EUROPEAN PATENT APPLICATION**
published in accordance with Art. 153(4) EPC

(43) Date of publication:
**06.08.2025 Bulletin 2025/32**

(21) Application number: **23871675.7**

(22) Date of filing: **30.08.2023**

(51) International Patent Classification (IPC):
***D06M 13/322*** (2006.01) ***A01N 25/10*** (2006.01)
***A01N 47/44*** (2006.01) ***A01P 3/00*** (2006.01)
***D06M 13/17*** (2006.01) ***D06M 13/224*** (2006.01)
***D06M 13/292*** (2006.01) ***D06M 15/53*** (2006.01)

(52) Cooperative Patent Classification (CPC):
**A01N 25/10; A01N 47/44; A01P 3/00; D01D 5/34; D01F 8/06; D01F 8/14; D01F 11/04; D01F 11/06; D01F 11/08; D06M 13/17; D06M 13/224; D06M 13/292; D06M 13/322; D06M 15/37; D06M 15/53;** (Cont.)

(86) International application number:
**PCT/JP2023/031385**

(87) International publication number:
**WO 2024/070435 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 JP 2022156382**

(71) Applicants:
- **ES Indorama Ventures Co., Ltd.**
  **Osaka-shi, Osaka 530-6108 (JP)**
- **ES Indorama Ventures L.P.**
  **Athens, GA 30601 (US)**
- **ES Indorama Ventures Denmark ApS**
  **6800 Varde (DK)**

(72) Inventors:
- **KOGA Shin**
  **Osaka-shi, Osaka 530-6108 (JP)**
- **HYAKUTAKE Takahiro**
  **Osaka-shi, Osaka 530-6108 (JP)**

(74) Representative: **Becker, Eberhard**
**Becker Kurig & Partner**
**Patentanwälte mbB**
**Bavariastraße 7**
**80336 München (DE)**

# (54) FIBER, FIBER MOLDED BODY AND FIBER PRODUCT

(57) Provided are a fiber, a fiber molded body and a fiber product that have an excellent growth inhibitory effect on bacteria and excellent durable hydrophilic properties satisfying anti-sweat and liquid permeability characteristics. The fiber comprises a polyalkylene biguanide compound and at least one nonionic surfactant attached thereto, the nonionic surfactant being selected from the group consisting of a polyalkylene oxide additive type nonionic surfactant and a polyhydric alcohol type nonionic surfactant.



Processed by Luminess, 75001 PARIS (FR)

(Cont. next page)

(52) Cooperative Patent Classification (CPC): (Cont.)
**D06M 15/61**

## Description

### Technical Field

The present invention relates to a fiber having antibacterial properties and durable hydrophilicity. More specifically, the present invention relates to a fiber having antibacterial properties and durable hydrophilicity suitable for absorbent articles such as diapers, sanitary napkins, and pads, and medical materials such as hygiene masks.

### Related Art

In recent years, people value comfort and hygiene in daily life, and in response to this, fibers with antibacterial and deodorizing functions have been applied to many products. Thus, the market of fiber products with antibacterial functions is expected to continue expanding in the future. Within this market trend, a mainstream method for imparting antibacterial properties to a fiber is to incorporate inorganic antibacterial agents, represented by silver-based inorganic antibacterial agents, or inorganic materials exhibiting photocatalytic functions into the fiber during a fiber spinning process (Patent Document 1). Further, there is also another method of coating an antiviral fiber treatment agent containing an antiviral agent and benzalkonium chloride onto a fiber surface (Patent Document 2).

Fiber products used in absorbent articles and medical hygiene materials are in contact with skin for extended periods of time, and thus require low irritation to skin and excellent texture. Also, to improve stuffiness resistance and liquid permeability properties, permeability (durable hydrophilicity) with respect to repeated liquid permeation is required. In particular, in the surface materials of absorbent articles represented by disposable diapers, sanitary napkins, and incontinence pads, it is essential to have a performance to quickly pass liquids such as urine and menstrual blood to the absorbent material without leaving residue by enhancing durable hydrophilicity.

However, as disclosed in Patent Document 1, in the method of incorporating antibacterial agents into the fiber during the spinning process, the antibacterial agents incorporated into the fiber are covered by thermoplastic polymers, making it difficult to exert antibacterial effects. If the concentration of antibacterial agents is increased to enhance antibacterial properties, it will cause yarn breakage and poor stretching, and there will be a problem that good spinning properties cannot be obtained. Further, inorganic antibacterial agents containing silver or zinc have been disclosed as antibacterial agents, but when used in combination with surfactants having durable hydrophilicity, durable hydrophilicity decreases or becomes inactivated, and there will be a problem that satisfactory liquid permeability properties cannot be obtained.

Further, as an essential component, the fiber product disclosed in Patent Document 2 includes benzalkonium chloride, which is one of cationic surfactants thought to cause relatively strong irritation to skin. Thus, this fiber product may pose a risk of strong irritation to skin, and there is a problem that it is not suitable as fiber products for absorbent articles or medical hygiene materials which are in direct contact with skin for extended periods of time. Furthermore, the disclosed fiber materials include natural fibers such as cotton, silk, hemp, and wool, cellulose fibers such as rayon, semi-synthetic fibers such as cellulose acetate fibers, and synthetic fibers such as polyester, polyamide, and polyacrylonitrile, which lack good texture. Further, there has been no disclosure regarding issues or effects related to liquid permeability properties.

### Related Art Documents

#### Patent Documents

Patent Document 1: Japanese Patent Application Laid-Open No. H06-228823
Patent Document 2: Japanese Patent Application Laid-Open No. 2019-210563

## SUMMARY OF INVENTION

### Problem to Be Solved by Invention

The present invention has been made in view of such circumstances and an objective thereof is to provide a fiber, a fiber formed body, and a fiber product that have excellent proliferation inhibition effect against bacteria, and are excellent in durable hydrophilicity that satisfies stuffiness resistance and liquid permeability properties.

Means for Solving Problem

The present inventors have conducted extensive research to solve the above problems. As a result, the present inventors have found that, by using a polyalkylene biguanide compound as an antibacterial agent, high antibacterial properties can be exhibited despite a small addition amount, and durable hydrophilicity is less likely to deteriorate. Furthermore, the present inventors have found that, by using the polyalkylene biguanide compound in combination with a specific nonionic surfactant, a fiber having both excellent antibacterial properties and durable hydrophilicity can be obtained, thus completing the present invention.
In other words, the present invention includes the following configurations.

[1] A fiber to which a component (A) and a component (B) below are adhered,

(A) a polyalkylene biguanide compound represented by General Formula (1); and
(B) at least one nonionic surfactant selected from the group consisting of a polyalkylene oxide added type nonionic surfactant and a polyhydric alcohol type nonionic surfactant,

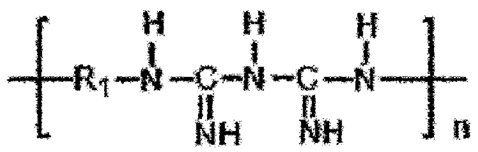 · · · (1)

in the formula, $R_1$ represents an alkylene group having 2 to 8 carbon atoms, and n represents an integer of 2 to 18.

[2] The fiber according to [1], to which a component (C) below is further adhered,
(C) at least one anionic surfactant selected from the group consisting of carboxylate salt, sulfonate salt, sulfate ester salt, and phosphate ester salt.
[3] The fiber according to [1] or [2], in which an adhesion amount of the component (A) is 0.003 to 0.5 mass% with respect to a mass of the fiber.
[4] The fiber according to any one of [1] to [3], in which the fiber is a heat adhesive conjugate fiber including an olefin-based resin.
[5] The fiber according to any one of [1] to [4], in which the polyalkylene oxide added type nonionic surfactant of the component (B) is at least one polyalkylene oxide added type nonionic surfactant selected from the group consisting of polyoxyalkylene alkyl ether, polyoxyalkylene alkylphenyl ether, polyoxyalkylene fatty acid ester, polyoxyalkylene polyhydric alcohol fatty acid ester, polyoxyalkylene alkylamino ether, and polyoxyalkylene alkyl alkanolamide.
[6] The fiber according to any one of [1] to [4], in which the polyhydric alcohol type nonionic surfactant of the component (B) is at least one polyhydric alcohol type nonionic surfactant selected from the group consisting of glycerine fatty acid ester, trimethylolpropane fatty acid ester, pentaerythritol fatty acid ester, sorbitan fatty acid ester, sorbitol fatty acid ester, sucrose fatty acid ester, polyglycerine fatty acid ester, and fatty acid alkanolamide.
[7] A fiber formed body including the fiber according to any one of [1] to [6].
[8] A fiber product including the fiber according to any one of [1] to [6].

Effect of Invention

By using the fiber of the present invention, it becomes possible to provide a fiber, a fiber formed body, and a fiber product that have excellent proliferation inhibition effect against bacteria and are excellent in durable hydrophilicity that satisfies stuffiness resistance and liquid permeability properties.

DESCRIPTION OF THE EMBODIMENTS

Hereinafter, the present invention will be described in detail.
It is important that a component (A) and a component (B), to be described in detail below, are adhered to a fiber of the present invention, and the fiber of the present invention may include a component (C) and/or other components as needed.

(Component (A))

The component (A) used in the present invention is a polyalkylene biguanide compound represented by General

Formula (1).

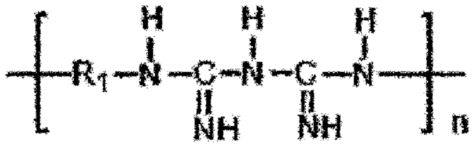 · · · (1)

(In the formula, $R_1$ represents alkylene having 2 to 8 carbon atoms, and n represents an integer of 2 to 18.)

$R_1$ in General Formula (1) is selected from alkylene having 2 to 8 carbon atoms, and specifically, may be selected from linear alkylene such as ethylene, propylene, butylene, pentylene, hexamethylene, heptamethylene, octamethylene, and branched alkylene such as isopropylene, isobutylene, isopentylene, dimethylpropylene, dimethylbutylene. Among these, from the viewpoint of proliferation inhibition effect against bacteria, mold, virus, etc., $R_1$ is preferably alkylene having 4 to 8 carbon atoms, and more preferably hexamethylene. Further, a polyalkylene biguanide compound with one $R_1$ may be used alone, or two or more polyalkylene biguanide compounds with different $R_1$ may be used in combination.

In General Formula (1), n represents a degree of polymerization of the polyalkylene biguanide compound and is selected from an integer of 2 to 18. Among these, from the viewpoint of proliferation inhibition effect against bacteria, mold, virus, etc. and handling properties, n is preferably an integer of 10 to 14, and more preferably an integer of 11 to 13. Further, a polyalkylene biguanide with one degree n of polymerization may be used alone, or polyalkylene biguanides with different degrees n of polymerization may be used in combination.

In the present invention, the polyalkylene biguanide compound includes forms of salts with inorganic acids such as hydrochloric acid, nitric acid, or sulfuric acid, or salts with organic acids such as acetic acid, lactic acid, or gluconic acid. Among such salts, hydrochloride, acetate, or gluconate are preferable, and hydrochloride is more preferable. Further, it is also possible to use the polyalkylene biguanide compound and a salt thereof in combination.

The polyalkylene biguanide compound may be manufactured according to conventional methods or may be commercially available products. Examples of the commercially available products include "Marukacide AV (manufactured by Osaka Kasei Co., Ltd.)" and "Pr.CLEAN 500 (manufactured by Premialine Co., Ltd.)".

An adhesion amount of the component (A) to the fiber of the present invention is not particularly limited, but is preferably 0.003 to 0.5 mass%, more preferably 0.005 to 0.1 mass%, even more preferably 0.005 to 0.05 mass%, and particularly preferably 0.005 to 0.03 mass%, with respect to a mass of the fiber. If the adhesion amount of the component (A) is 0.003 mass% or more, satisfactory proliferation inhibition effect against bacteria, mold, virus, etc. can be obtained. If the adhesion amount is 0.5 mass% or less, satisfactory durable hydrophilicity can be obtained, and it becomes possible to reduce irritation to skin and reduce environmental impact and cost by reduced usage.

(Component (B))

The component (B) used in the present invention is at least one nonionic surfactant selected from the group consisting of a polyalkylene oxide added type nonionic surfactant (component (B1)) and a polyhydric alcohol type nonionic surfactant (component (B2)).

The polyalkylene oxide added type nonionic surfactant (component (B1)) used in the present invention is not particularly limited, but from the viewpoint of imparting excellent durable hydrophilicity to the fiber, it is preferably at least one alkylene oxide added type nonionic surfactant selected from the group consisting of polyoxyalkylene alkyl ether, polyoxyalkylene alkylphenyl ether, polyoxyalkylene fatty acid ester, polyoxyalkylene polyhydric alcohol fatty acid ester, polyoxyalkylene alkylamino ether, and polyoxyalkylene alkyl alkanolamide, and is more preferably at least one alkylene oxide added type nonionic surfactant selected from the group consisting of polyoxyalkylene alkyl ether and polyoxyalkylene fatty acid ester.

The polyhydric alcohol type nonionic surfactant (component (B2)) used in the present invention is not particularly limited, but from the viewpoint of imparting excellent durable hydrophilicity to the fiber, it is preferably at least one polyhydric alcohol type nonionic surfactant selected from the group consisting of glycerine fatty acid ester, trimethylolpropane fatty acid ester, pentaerythritol fatty acid ester, sorbitan fatty acid ester, sorbitol fatty acid ester, sucrose fatty acid ester, polyglycerine fatty acid ester, and fatty acid alkanolamide, is more preferably at least one polyhydric alcohol type nonionic surfactant selected from the group consisting of sorbitan fatty acid ester, polyglycerine fatty acid ester, and fatty acid alkanolamide, and is even more preferably sorbitan fatty acid ester.

The alkyl constituting the component (B) used in the present invention is not particularly limited, may be, for example, alkyl having 8 to 24 carbon atoms, and from the viewpoint of improvement in durable hydrophilicity and dispersion stability in the fiber treatment agent, it is preferably alkyl having 12 to 22 carbon atoms. A part of any $-CH_2-$ in this alkyl may be substituted with -CH=CH-, cycloalkylene, or cycloalkenylene. This alkyl may be alkyl derived from natural oils such as palm oil, beef tallow, rapeseed oil, rice bran oil, or fish oil, or may be synthetic alkyl.

The fatty acid constituting the component (B) used in the present invention is not particularly limited, may be, for example, fatty acid having 6 or more carbon atoms, and from the viewpoint of improving durable hydrophilicity, it is preferably fatty acid having 8 to 24 carbon atoms. A part of any $-CH_2-$ constituting this fatty acid may be substituted with -CH=CH-, cycloalkylene, or cycloalkenylene. This fatty acid may be fatty acid derived from natural oils such as palm oil, beef tallow, rapeseed oil, rice bran oil, or fish oil, or may be synthetic fatty acid.

The polyhydric alcohol constituting the component (B) used in the present invention is not particularly limited, and may be, for example, dihydric to octahydric alcohols such as glycerine, trimethylolpropane, pentaerythritol, sorbitan, sorbitol, sucrose, polyglycerine, diethanolamine, or dipropanolamine. Among these, from the viewpoint of improving durable hydrophilicity, glycerine, sorbitan, polyglycerine, or diethanolamine are preferable, and sorbitan is more preferable.

The polyoxyalkylene (polyalkylene oxide) constituting the component (B1) is not particularly limited, and may be, for example, polyethylene glycol or a polymer with alkylene oxide as a repeating unit. The alkylene oxide may be, for example, ethylene oxide, propylene oxide, or butylene oxide, may be a homopolymer of alkylene oxides with the same carbon number, may be a random or block copolymer of alkylene oxides with different carbon numbers, and may be, for example, a random or block copolymer of ethylene oxide and propylene oxide. Among these, from the viewpoint of imparting excellent durable hydrophilicity to the fiber, polyethylene glycol, an ethylene oxide homopolymer, or a random or block copolymer of ethylene oxide and propylene oxide are preferable. A number average molecular weight m of the polyethylene glycol is not particularly limited, but is preferably 200 to 600. The polyethylene glycol may be abbreviated as PEG, and in the case of the number average molecular weight m, it may be denoted as PEG(m). Further, a number n of repetitions of alkylene oxide in the polymer with alkylene oxide as a repeating unit is not particularly limited, but is preferably 5 to 50, and 50 to 100% of the alkylene oxide is preferably ethylene oxide. The ethylene oxide may be abbreviated as EO, and in the case of a number n of repetitions, it may be denoted as EO(n).

The component (B1) may be obtained according to methods such as: a method of directly adding alkylene oxide to alcohol, fatty acid, or alkylamine; a method of reacting fatty acid or the like with polyethylene glycols obtained by adding alkylene oxide to glycols; or a method of adding alkylene oxide to esterified or amidated products obtained by reacting fatty acid with polyhydric alcohol.

The component (B2) may be obtained according to methods such as esterification or amidation reaction between polyhydric alcohol and fatty acid.

The adhesion amount of the component (B) is not particularly limited, but is preferably 0.015 to 1.0 mass%, more preferably 0.02 to 0.8 mass%, and even more preferably 0.04 to 0.6 mass%, with respect to the mass of the fiber. If the adhesion amount is 1.0 mass% or less, the texture becomes favorable as the fiber is less likely to feel sticky. If the adhesion amount is 0.015 mass% or more, a fiber with excellent durable hydrophilicity can be obtained.

An adhesion amount ratio of the component (B) to the component (A) (adhesion amount of component (B)/adhesion amount of component (A)) is not particularly limited, but is preferably 0.1 to 100, and more preferably 1 to 50. If the adhesion amount ratio is 0.1 or more, a fiber with excellent durable hydrophilicity can be obtained, and if the adhesion amount ratio is 100 or less, a fiber with excellent antibacterial properties can be obtained.

(Component (C))

The fiber of the present invention is not particularly limited, but for the purpose of suppressing static electricity on the fiber, a fiber formed body, or a fiber product, at least one anionic surfactant selected from the group consisting of carboxylate salt, sulfonate salt, sulfate ester salt, and phosphate ester salt may be further adhered as a component (C) to the fiber of the present invention. By suppressing static electricity by adhesion of the component (C), for example, excellent card passage properties (fiber discharge properties from carding machines) can be imparted to the fiber, and effects such as prevention of foreign matter adhesion, prevention of peeling electrification, prevention of repulsion during functional material coating, and prevention of static electricity during put-on and take-off of the fiber product can be obtained.

The carboxylate salt is not particularly limited, and may be, for example, potassium oleate salt or sodium laurate salt. The sulfonate salt is not particularly limited, and may be, for example, alkyl sulfonate salts such as sodium lauryl sulfonate salt or sodium cetyl sulfonate salt, and alkylbenzene sulfonate salt such as lauryl benzene sulfonate salt. The sulfate ester salt is not particularly limited, and may be, for example, alkyl sulfate ester salt such as sodium stearyl sulfate ester salt, and sulfate alkyl (polyoxyalkylene) ester salt such as sodium sulfate ester salt of a compound obtained by adding oxyalkylene to lauryl alcohol. The phosphate ester salt is not particularly limited, and may be, for example, phosphate ester salt of higher alcohols such as stearyl alcohol or a compound obtained by adding polyoxyalkylene thereto. Among these, higher alcohols, polyoxyalkylene-added sulfate ester alkali metal salt or phosphate ester alkali metal salt are excellent in antistatic properties and are thus preferable, and phosphate ester alkali metal salt is also excellent in fiber smoothness and is thus particularly preferable. These may be used as one type alone or as a combination of two or more types.

An adhesion amount of the component (C) is not particularly limited, but is preferably 0.02 to 0.6 mass%, more preferably 0.06 to 0.5 mass%, and even more preferably 0.1 to 0.4 mass%, with respect to the mass of the fiber. If the

adhesion amount is 0.02 mass% or more, static electricity is suppressed and card passage properties become favorable, and if the adhesion amount is 0.6 mass% or less, a fiber excellent in antibacterial properties can be obtained.

An adhesion amount ratio of the component (C) to the component (A) (adhesion amount of component (C)/adhesion amount of component (A)) is not particularly limited, but is preferably 0.1 to 100, and more preferably 2 to 65. If the adhesion amount ratio is 0.1 or more, static electricity can be suppressed, and if the adhesion amount ratio is 100 or less, a fiber excellent in antibacterial properties can be obtained.

(Other components)

Components (other components) other than the component (A), the component (B), or the component (C) may be adhered to the fiber of the present invention. The other components are not particularly limited, and the following may be added: a pH adjusting agent such as alkanolamine having 2 to 4 carbon atoms, a chelating agent such as EDTA or sodium polyphosphate, a skin protective agent such as squalane or sodium hyaluronate, a hydrophilic agent such as alkyl betaine or polyoxyethylene-modified silicone, a water repellent such as dimethyl polysiloxane (silicone oil) or a perfluoroalkyl group-containing compound, a fragrance such as phenylethyl alcohol or hexyl cinnamic aldehyde, a preservative, a rust inhibitor, or a defoaming agent.

(Fiber)

The fiber of the present invention may be a fiber (single fiber) composed of one component or a conjugate fiber composed of two or more components. Further, a cross-sectional shape of the fiber is not particularly limited, and may be any of a round shape such as a circle or an ellipse, an angular shape such as a triangle or a rectangle, a modified shape such as a star-shape or an octolobal shape, or a divided shape or a hollow shape.

In the case where the fiber of the present invention is a single fiber, the fiber is not particularly limited, and may be, for example, a natural fiber (such as a wood fiber), a regenerated fiber (such as rayon), a semi-synthetic fiber (such as acetate), a synthetic fiber (such as a polyolefin-based resin, a polyester-based resin, an acrylic-based resin, a nylon-based resin, a vinyl chloride-based resin, etc.). The fiber is preferably a synthetic fiber composed of a polyolefin-based resin since an effect of imparting an excellent texture to a nonwoven fabric and a fiber product can be obtained. The polyolefin-based resin is not particularly limited, and may be, for example, a polyethylene-based resin such as low-density polyethylene (LDPE), linear low-density polyethylene (LLDPE), or high-density polyethylene (HDPE), and a polypropylene-based resin such as crystalline polypropylene (PP) or a copolymer (Co-PP) of propylene and $\alpha$-olefin (excluding propylene) with propylene serving as a main component.

In the case where the fiber of the present invention is a conjugate fiber, a conjugate form thereof is not particularly limited and may be, for example, a concentric sheath-core type, an eccentric sheath-core type, a side-by-side type, a radial type, or an island-in-sea type, but from the viewpoint of texture and strength, the concentric sheath-core type, the eccentric sheath-core type, or the side-by-side type is preferable. Further, components constituting the conjugate fiber are not particularly limited, but if at least one of the components is a polyolefin-based resin, an effect of imparting an excellent texture to the nonwoven fabric and the fiber product can be obtained. Further, a combination of the components constituting the conjugate fiber is not particularly limited, but a melting point difference is preferably 10°C or more, and more preferably 20°C or more. By having a melting point difference, heat adhesiveness can be imparted to the conjugate fiber, and it becomes possible to reduce irritation to skin because the nonwoven fabric can be formed without using components that cause much irritation to skin, such as adhesives. Specific combinations of a high-melting point component/a low-melting point component may be, for example, PP/HDPE, PP/LLDPE, PP/Co-PP, polyethylene terephthalate (PET)/HDPE, PET/LLDPE, PET/copolymerized polyethylene terephthalate (Co-PET), PET/PP, or polylactic acid (PLA)/HDPE, but from the viewpoint of texture, raw material cost, and production stability, the combination of PP/HDPE or PET/HDPE is preferable, and the combination of PP/HDPE is more preferable. Further, from the viewpoint of heat adhesiveness of the conjugate fiber, the low-melting component preferable occupies 50% or more, and more preferably 70% or more, of a surface of the conjugate fiber.

Further, a volume ratio of the low-melting point component to the high-melting point component is not particularly limited. However, if a ratio of the low-melting point component is high, there is a tendency that a bonding point strength between conjugate fibers improves and a nonwoven fabric with high strength can be obtained. If a ratio of the high-melting point component is high, there is a tendency that the texture of the nonwoven fabric or the fiber product improves. From such viewpoints, the volume ratio is preferably 20/80 to 80/20, and more preferably 30/70 to 70/30.

The fiber of the present invention may include additives such as an antioxidant, a light stabilizer, an ultraviolet absorber, a neutralizing agent, a nucleating agent, an epoxy stabilizer, a lubricant, a flame retardant, an antistatic agent, a pigment, or a plasticizer as needed, within a range without interfering with the effects of the present invention.

A fineness of the fiber is not particularly limited, but may be, for example, 0.6 to 5.0 dtex. Particularly, in the case of use as a surface material of an absorbent article such as a disposable diaper, by configuring the fiber to have a lower

fineness, the texture of the nonwoven fabric or the fiber product becomes favorable. Furthermore, because smoothness improves if the fineness is low, friction with skin is reduced and rashes decrease. On the other hand, from the viewpoint of processability, handling properties, and production cost, it is preferable to have a certain degree of fineness. From such viewpoints, the fineness of the fiber is more preferably 0.8 to 2.2 dtex, and even more preferably 1.1 to 1.7 dtex.

(Fiber formed body)

Since the fiber formed body of the present invention includes the fiber described above, the fiber formed body of the present invention has excellent proliferation inhibition effect against bacteria, and is excellent in durable hydrophilicity that satisfies stuffiness resistance and liquid permeability properties.

The fiber formed body of the present invention is not particularly limited, and may be, for example, a net, a web, a knitted or woven fabric, or a nonwoven fabric, but from the viewpoint of skin feel and texture, the fiber formed body is preferably a nonwoven fabric. The nonwoven fabric is not particularly limited, and may be, for example, a through-air nonwoven fabric, an airlaid nonwoven fabric, a spunbond nonwoven fabric, a meltblown nonwoven fabric, a spunlace nonwoven fabric, or a needle-punched nonwoven fabric, but from the viewpoint of skin feel and texture, the nonwoven fabric is preferably a through-air nonwoven fabric.

The fiber formed body of the present invention may include a fiber other than the fiber of the present invention as long as it does not hinder the effects of the present invention, and a ratio thereof is not particularly limited, but may be 1 to 30 mass% with respect to a total weight of the nonwoven fabric. If the ratio of the fiber other than the fiber of the present invention is 1 mass% or more, an effect commensurate with use can be obtained, and if the ratio is 30 mass% or less, a nonwoven fabric having satisfactory proliferation inhibition effect against bacteria, mold, viruses, etc. and durable hydrophilicity can be obtained.

The fiber formed body may be composed of one type (single layer) of fiber formed body, or may be obtained by laminating two or more types of fiber formed bodies that differ in fineness, composition, density, or manufacturing method. In the case where two or more types of fiber formed bodies are laminated, for example, by laminating fiber formed bodies with different finenesses or compositions, it is possible to obtain a fiber formed body in which a size of gaps formed between fibers and a degree of durable hydrophilicity change, allowing control of texture and durable hydrophilicity.

The fiber formed body of the present invention is not particularly limited, but may be laminated and integrated with a fiber formed body that does not include the fiber of the present invention. By laminating and integrating, various physical properties such as texture, durable hydrophilicity, and strength can be controlled. The fiber formed body that does not include the fiber of the present invention may be, for example, a through-air nonwoven fabric, a spunbond nonwoven fabric, a meltblown nonwoven fabric, a spunlace nonwoven fabric, a needle-punched nonwoven fabric, a film, a mesh, a net, or a woven or knitted fabric. A method of laminating and integrating is not particularly limited, but may be, for example, a method of laminating and integrating with an adhesive such as hot melt, or a method of laminating and integrating by thermal bonding such as through-air bonding or thermal embossing.

The fiber formed body of the present invention may be subjected to an antistatic treatment, a water repellent treatment, a hydrophilic treatment, an antibacterial treatment, an ultraviolet absorption treatment, a near-infrared absorption treatment, or an electret treatment according to the purpose, within a range without impairing the effects of the present invention.

(Fiber product)

Since the fiber product of the present invention includes the fiber described above, the fiber product of the present invention has excellent proliferation inhibition effect against bacteria, and is excellent in durable hydrophilicity that satisfies stuffiness resistance and liquid permeability properties.

The fiber product of the present invention is not particularly limited, and may be, for example, various fiber products that require proliferation inhibition effect against bacteria, stuffiness resistance, and liquid permeability properties, such as: absorbent articles including diapers, sanitary napkins, or incontinence pads; sanitary materials including masks, gowns, or surgical gowns; interior materials including wall sheets, shoji paper, or flooring materials; daily life-related materials including cover cloths, cleaning wipers, or food waste covers; toiletry products including disposable toilets or toilet covers; pet supplies including pet sheets, pet diapers, or pet towels; industrial materials including wiping materials, filters, cushioning materials, oil absorbents, or absorbents for ink tanks; general medical materials, bedding materials, and nursing care products. In particular, the fiber product of the present invention is suitable for a surface material of an absorbent article such as diapers, sanitary napkins, or incontinence pads.

(Manufacturing method of fiber)

The fiber of the present invention is not particularly limited, but a fiber treatment agent mixing the component (A)

and the component (B) may be adhered to the fiber, or the component (A) may be adhered (top-coated) after the component (B) has been adhered to the fiber. Further, a method of adhesion is not particularly limited, and may be adhesion according to conventional methods such as contact with an oiling roll, immersion in an immersion bath, or spray misting, after a spinning and/or drawing process of the fiber, or after a heat treatment and drying process.

(Manufacturing method of fiber formed body)

The fiber formed body of the present invention may be a fiber formed body processed using a fiber to which the component (A) and the component (B) are adhered, the component (A) may be adhered after a fiber formed body is processed using a fiber to which the component (B) is adhered, or the component (A) and the component (B) may be adhered after a fiber formed body is formed.

A processing method of the fiber formed body is not particularly limited, and conventional methods may be used. In the case where the fiber formed body is a nonwoven fabric, the processing method may be, for example, a method of integrating a web according to thermal bonding methods such as a through-air method or a point bond method, entanglement methods such as a needle punch method or a spunlace method, or a resin bond method using an adhesive or the like. The web is not particularly limited, but may be a long fiber web formed according to a spunbond method, a meltblown method, or a tow opening method, or may be a short fiber web formed using a short fiber (staple or chop) according to a carding method, an airlaid method, or a wet-laid method. From the viewpoint of skin feel and texture, it is preferable to use a method of integrating, by the through-air method, a web formed by the carding method using a short fiber with a fiber length of 20 to 102 mm. In the present invention, a "web" refers to a fiber aggregate in which fibers are loosely entangled to an extent capable of maintaining a sheet shape, meaning a state in which fibers are not adhered to each other or a state in which fibers are not firmly entangled with each other.

Examples

Hereinafter, the present invention will be described in detail according to Examples, but the present invention is not limited thereto. Raw materials used in Examples and methods for measuring physical properties are shown below.

(Fiber treatment agent)

Compositions of fiber treatment agents (1) to (13) to be adhered to the fiber of the present invention are shown in Table 1.

[Table 1]

| Component | | | Fiber treatment agent | | | | | | | | | | | | |
|---|---|---|---|---|---|---|---|---|---|---|---|---|---|---|---|
| | | | (1) | (2) | (3) | (4) | (5) | (6) | (7) | (8) | (9) | (10) | (11) | (12) | (13) |
| (A) | | Polyhexamethylene biguanide | 0.6 | 0.9 | 4.0 | 10.0 | 19.5 | 80.0 | 4.1 | 10.0 | 4.0 | 10.0 | 5.3 | | 13.0 |
| (B) | (B1) | EO(30) Castor oil ester | | | | | | | 19.3 | 18.0 | 38.4 | 36.0 | | | |
| | | PEG(400) Monooleate | | | | | | | | | 9.6 | 9.0 | | | |
| | | EO(20) Lauryl ether | | | | | | | | | | | 94.7 | | |
| | (B2) | Sorbitan monopalmitate | 10.0 | 9.9 | 9.6 | 9.0 | 8.0 | 2.0 | | | | | | 10.0 | |
| | | Sorbitan monostearate | 32.9 | 32.8 | 31.7 | 29.7 | 26.6 | 6.6 | | | | | | 33.0 | |
| (C) | | Tridecyl phosphate ester K salt | 25.8 | 25.7 | 25.0 | 23.4 | 20.9 | 5.2 | | | | | | 26.0 | |
| | | Lauryl phosphate ester K salt | 30.7 | 30.7 | 29.7 | 27.9 | 25.0 | 6.2 | 38.4 | 36.0 | 24.0 | 22.5 | | 31.0 | 9.4 |
| | | Stearyl phosphate ester K salt | | | | | | | 9.6 | 9.0 | | | | | |
| | | Octyl phosphate ester K salt | | | | | | | | | 24.0 | 22.5 | | | 77.6 |
| Others | | Stearyl betaine | | | | | | | 14.3 | 13.5 | | | | | |
| | | Polyoxyethylene-modified silicone | | | | | | | 14.3 | 13.5 | | | | | |

(Fineness of fiber)

The fineness of the fiber was measured in accordance with JIS L 1015.

(Adhesion amount of fiber treatment agent)

The adhesion amount of the fiber treatment agent was measured according to a rapid extraction method using a rapid residual oil extractor R-II type (manufactured by Tokai Instruments Co., Ltd.). 2 g of a sample fiber was packed into a metal cylinder (inner diameter 16 mm, length 130 mm; a bottom part being mortar-shaped with a 1 mm hole at a bottom-most part), and 25 ml of methanol was added from an upper part in several divided portions. The liquid dripping from the hole at the bottom part was collected in a heated aluminum dish, and the methanol was evaporated. A mass (g) of the residue in the aluminum dish was measured, and the adhesion amount was calculated according to the following formula. The mass of the residue was an average value of two measurements.

$$\text{Adhesion amount (mass\%)} = (\text{Mass (g) of residue} / 2\ (\text{g})) \times 100$$

(Adhesion amounts of component (A), component (B), component (C), and other components)

The adhesion amounts of the component (A), the component (B), the component (C), and the other components were calculated from the adhesion amount of the fiber treatment agent and the composition ratios shown in Table 1.

(Basis weight of nonwoven fabric)

The mass of a 100 mm × 100 mm cut nonwoven fabric was measured, and a value converted into a mass per unit area was taken as the basis weight (g/$m^2$) of the nonwoven fabric.

(Evaluation of antibacterial properties)

An antibacterial test was performed in accordance with JIS L1902:2015 bacterial liquid absorption method (quantitative test). 0.2 ml of a test bacterial liquid, which was prepared by adding 0.05 mass% of a surfactant (Tween 80 (product name of Tokyo Chemical Industry Co., Ltd.)) to a liquid adjusted to an inoculum concentration (CFU/ml) of $1 \times 10^5$ to $3 \times 10^5$, was uniformly inoculated onto 0.4 g of an autoclave-sterilized nonwoven fabric, and a sterilized cap was fastened. This was cultured at 37 ± 1°C for 18 hours, and a viable bacteria count after culturing was measured. The samples were two types including a standard cotton fabric and nonwoven fabrics prepared in each Example, and Staphylococcus aureus (Staphylococcus aureus NBRC12732) was used as test bacteria. Then, an antibacterial activity value, which is an index of antibacterial properties, was calculated according to the following formula.

$$\text{Antibacterial activity value} = (\log C_t - \log C_0) - (\log T_t - \log T_0)$$

Herein, $\log C_0$ represents an average value of a count of bacteria recovered immediately after inoculation on the standard fabric, logCt represents an average value of a count of bacteria recovered after 18 hours of cultivation on the standard fabric, $\log T_0$ represents an average value of a count of bacteria recovered immediately after inoculation on the treated fabric, and $\log T_t$ represents an average value of a count of bacteria recovered after 18 hours of cultivation on the treated fabric.

The evaluation of antibacterial properties was performed in the following three stages.

◎: Antibacterial activity value was 3.0 or higher.
◦: Antibacterial activity value was 2.5 or higher and less than 3.0.
×: Antibacterial activity value was less than 2.5.

(Evaluation of durable hydrophilicity)

The evaluation was performed according to a method based on measurement of a liquid permeation time in EDANA ERT §153.0-02 (strike-through method). An absorbent paper used was Kim Towel (product name) manufactured by Crecia Corporation, cut to approximately 90 mm × 90 mm (adjusted to 5.00 to 5.05 g), and a liquid permeation time of 15 ml of physiological saline was measured. This process was repeated three times. Each liquid permeation time was an average value of two measurements. The evaluation of durable hydrophilicity was performed in the following three stages.

◎: Maximum value of liquid permeation time from 1st to 3rd measurements was less than 5 seconds.

◦: Maximum value of liquid permeation time from 1st to 3rd measurements was 5 seconds or more and less than 20 seconds.

×: Maximum value of liquid permeation time from 1st to 3rd measurements was 20 seconds or more.

(Evaluation of antistatic properties)

30 g of a sample fiber was placed in a 200cc beaker and pressed into the beaker with a glass rod. Then, using a leakage electrical resistance meter SM-8213 (manufactured by Hioki Electric Co., Ltd.), measurement was taken with a measuring voltage of 5 kV and an electrode pressed against the sample fiber with a load of 2 kg. A logarithm of the measured value was taken as a leakage electrical resistance value (logR(Ω)). The smaller the logR, the less likely electricity is to leak, indicating excellent antistatic properties.

[Example 1]

A concentric sheath-core type conjugate fiber was melt-spun, with HDPE (density: 0.956 g/cm$^3$, melt flow rate (190°C, load 21.18N): 16 g/10 min, melting point: 131°C) as a sheath component and PET (intrinsic viscosity (value measured at a concentration of 0.5 g/100 ml at 20°C using an equal weight mixture solvent of phenol and tetrachloroethane): 0.65 dl/g, melting point: 255°C) as a core component at a volume ratio of 50/50. At this time, an aqueous solution diluted with ion-exchanged water was brought into contact with an oiling roll such that an adhesion amount of a fiber treatment agent (1) became about 0.5 mass% with respect to the mass of the fiber, and the fiber treatment agent (1) was adhered to the fiber surface. After going through a drawing process, drying was performed to obtain a fiber. Subsequently, the fiber was cut with a cutter into a short fiber with a cut length of 51 mm, and this was used as a sample fiber. The sample fiber was formed into a card web using a roller card tester, and this web was through-air processed at 130°C using a suction dryer to obtain a nonwoven fabric.

[Examples 2 to 11, Comparative Examples 1 to 2]

As shown in Table 2, sample fibers and nonwoven fabrics were obtained in the same manner as in Example 1, except that the fiber treatment agent was changed.

Results of a fineness, an adhesion amount of each component, a basis weight of the nonwoven fabric, antibacterial properties, durable hydrophilicity, and antistatic properties of the fibers obtained in Examples 1 to 11 and Comparative Examples 1 to 2 are summarized in Table 2.

[Table 2]

| | | | Example 1 | Example 2 | Example 3 | Example 4 | Example 5 | Example 6 | Example 7 | Example 8 | Example 9 | Example 10 | Example 11 | Comparative Example 1 | Comparative Example 2 |
|---|---|---|---|---|---|---|---|---|---|---|---|---|---|---|---|
| Fineness (dtex) of fiber | | | 1.7 | 1.7 | 1.7 | 1.7 | 1.7 | 1.7 | 1.7 | 1.7 | 1.7 | 1.7 | 1.7 | 1.7 | 1.7 |
| Fiber treatment agent | Type | | (1) | (2) | (3) | (4) | (5) | (6) | (7) | (8) | (9) | (10) | (11) | (12) | (13) |
| | Adhesion amount (%) | | 0.520 | 0.520 | 0.640 | 0.610 | 0.501 | 0.510 | 0.539 | 0.540 | 0.479 | 0.511 | 0.412 | 0.560 | 0.510 |
| | Breakdown (%) | Component A | 0.003 | 0.005 | 0.026 | 0.061 | 0.098 | 0.408 | 0.022 | 0.054 | 0.019 | 0.051 | 0.022 | - | 0.066 |
| | | Component B | 0.223 | 0.222 | 0.264 | 0.236 | 0.173 | 0.044 | 0.104 | 0.097 | 0.230 | 0.230 | 0.390 | 0.241 | - |
| | | Component C | 0.294 | 0.293 | 0.350 | 0.313 | 0.230 | 0.058 | 0.259 | 0.243 | 0.230 | 0.230 | - | 0.319 | 0.444 |
| | | Others | - | - | - | - | - | - | 0.154 | 0.146 | - | - | - | - | - |
| Basis weight ($g/m^2$) of nonwoven fabric | | | 25 | 25 | 25 | 25 | 25 | 25 | 25 | 25 | 25 | 25 | 25 | 25 | 25 |
| Antibacterial properties | Antibacterial activity value | | 2.6 | 3.1 | 3.6 | 3.9 | 5.0 | 6.1 | 3.7 | 4.2 | 3.8 | 5.4 | 5.9 | 2.3 | 2.7 |
| | Evaluation | | ○ | ◎ | ◎ | ◎ | ◎ | ◎ | ◎ | ◎ | ◎ | ◎ | ◎ | × | ○ |
| Durable hydrophilicity | Liquid permeation time (sec) | 1st time | 2.9 | 2.8 | 2.8 | 3.4 | 3.2 | 3.0 | 3.2 | 3.1 | 2.7 | 3.0 | 3.2 | 3.0 | 3.5 |
| | | 2nd time | 3.7 | 3.7 | 3.5 | 3.5 | 3.5 | 6.5 | 3.8 | 3.6 | 3.4 | 3.7 | 3.1 | 3.7 | 26.7 |
| | | 3rd time | 3.9 | 4.0 | 3.9 | 4.2 | 3.9 | 11.9 | 3.9 | 3.7 | 3.8 | 4.6 | 3.9 | 4.2 | 28.1 |
| | Evaluation | | ◎ | ◎ | ◎ | ◎ | ◎ | ○ | ◎ | ◎ | ◎ | ◎ | ◎ | ◎ | × |
| Antistatic properties | Leakage electrical resistance value logR (Ω) | | 7.4 | 7.2 | 7.1 | 7.1 | 7.9 | 8.8 | 7.8 | 7.9 | 8.0 | 8.1 | 9.3 | 7.5 | 7.3 |

As can be learned from the results in Table 2, the fiber of the present invention to which the component (A) and the component (B) are adhered has both excellent antibacterial properties and durable hydrophilicity. In particular, it is learned that by configuring the adhesion amount of the component (A) to be a specific range with respect to the mass of the fiber, both antibacterial properties and durable hydrophilicity can be exhibited at high levels. Further, Examples 1 to 10 including the components (A), (B), and (C) exhibited suppressed static electricity compared to Example 11 which does not include the component (C).

Industrial Applicability

The fiber of the present invention has excellent proliferation inhibition effect against bacteria, and is excellent in durable hydrophilicity that satisfies stuffiness resistance and liquid permeability properties. Thus, the fiber of the present invention may be suitably used in various fiber products that require proliferation inhibition effect against bacteria, stuffiness resistance, and liquid permeability properties, such as: absorbent articles including diapers, sanitary napkins, or incontinence pads; sanitary materials including masks, gowns, or surgical gowns; interior materials including wall sheets, shoji paper, or flooring materials; daily life-related materials including cover cloths, cleaning wipers, or food waste covers; toiletry products including disposable toilets or toilet covers; pet supplies including pet sheets, pet diapers, or pet towels; industrial materials including wiping materials, filters, cushioning materials, oil absorbents, or absorbents for ink tanks; general medical materials, bedding materials, and nursing care products.

## Claims

1. A fiber to which a component (A) and a component (B) below are adhered,

   (A) a polyalkylene biguanide compound represented by General Formula (1); and
   (B) at least one nonionic surfactant selected from the group consisting of a polyalkylene oxide added type nonionic surfactant and a polyhydric alcohol type nonionic surfactant,

   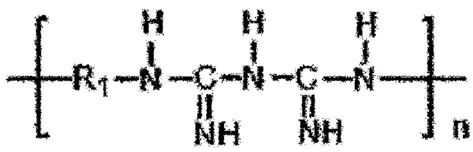 · · · (1)

   wherein $R_1$ represents an alkylene group having 2 to 8 carbon atoms, and n represents an integer of 2 to 18.

2. The fiber according to claim 1, to which a component (C) below is further adhered,
   (C) at least one anionic surfactant selected from the group consisting of carboxylate salt, sulfonate salt, sulfate ester salt, and phosphate ester salt.

3. The fiber according to claim 1 or 2, wherein an adhesion amount of the component (A) is 0.003 to 0.5 mass% with respect to a mass of the fiber.

4. The fiber according to claim 1 or 2, wherein the fiber is a heat adhesive conjugate fiber comprising an olefin-based resin.

5. The fiber according to claim 1 or 2, wherein the polyalkylene oxide added type nonionic surfactant of the component (B) is at least one polyalkylene oxide added type nonionic surfactant selected from the group consisting of polyoxyalkylene alkyl ether, polyoxyalkylene alkylphenyl ether, polyoxyalkylene fatty acid ester, polyoxyalkylene polyhydric alcohol fatty acid ester, polyoxyalkylene alkylamino ether, and polyoxyalkylene alkyl alkanolamide.

6. The fiber according to claim 1 or 2, wherein the polyhydric alcohol type nonionic surfactant of the component (B) is at least one polyhydric alcohol type nonionic surfactant selected from the group consisting of glycerine fatty acid ester, trimethylolpropane fatty acid ester, pentaerythritol fatty acid ester, sorbitan fatty acid ester, sorbitol fatty acid ester, sucrose fatty acid ester, polyglycerine fatty acid ester, and fatty acid alkanolamide.

7. A fiber formed body comprising the fiber according to claim 1 or 2.

**8.** A fiber product comprising the fiber according to claim 1 or 2.

**INTERNATIONAL SEARCH REPORT**

International application No. **PCT/JP2023/031385**

**A. CLASSIFICATION OF SUBJECT MATTER**

***D06M 13/322***(2006.01)i; ***A01N 25/10***(2006.01)i; ***A01N 47/44***(2006.01)i; ***A01P 3/00***(2006.01)i; ***D06M 13/17***(2006.01)i; ***D06M 13/224***(2006.01)i; ***D06M 13/292***(2006.01)i; ***D06M 15/53***(2006.01)i
FI: D06M13/322; A01N25/10; A01N47/44; A01P3/00; D06M13/17; D06M13/224; D06M13/292; D06M15/53

According to International Patent Classification (IPC) or to both national classification and IPC

**B. FIELDS SEARCHED**

Minimum documentation searched (classification system followed by classification symbols)

D06M13/322; A01N25/10; A01N47/44; A01P3/00; D06M13/17; D06M13/224; D06M13/292; D06M15/53

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2012-202000 A (LION CORP) 22 October 2012 (2012-10-22)<br>paragraphs [0029]-[0030], [0037]-[0039], [0042]-[0044] | 1, 3-8<br>2 |
| X<br>Y | JP 2019-26626 A (SETTSU SEIYU KK) 21 February 2019 (2019-02-21)<br>paragraphs [0049]-[0055] | 1, 3-8<br>2 |
| X<br>Y | CN 107616883 A (ZHEJIANG OCEAN UNIVERSITY) 23 January 2018 (2018-01-23)<br>paragraphs [0028]-[0036] | 1, 3, 5-8<br>2 |
| Y | US 2005/0101511 A1 (COLGATE-PALMOLIVE COMPANY) 12 May 2005 (2005-05-12)<br>paragraphs [0015]-[0026], [0032]-[0039], claims 1-2 | 2 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 November 2023** | **28 November 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/031385**

| Patent document cited in search report | Publication date (day/month/year) | Patent family member(s) | Publication date (day/month/year) |
|---|---|---|---|
| JP 2012-202000 A | 22 October 2012 | (Family: none) | |
| JP 2019-26626 A | 21 February 2019 | (Family: none) | |
| CN 107616883 A | 23 January 2018 | (Family: none) | |
| US 2005/0101511 A1 | 12 May 2005 | WO 2005/047444 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- JP H06228823 B
- JP 2019210563 A